# EUROPEAN PATENT APPLICATION

(11) **EP 4 769 754 A1**
(43) Date of publication of application: **01.07.2026**
(21) Application number: 25845067.5
(22) Date of filing: 14.07.2025
(51) Int. Cl.: H01M 50/342, H01M 50/383, H01M 50/249

(54) **BATTERY MODULE**

(30) Priority: 26.07.2024 KR 20240099479
(71) Applicant: LG Energy Solution, Ltd., Seoul 07335 (KR)
(72) Inventor: PARK, Min-Soo, Daejeon 34122 (KR); JUNG, Hye-Mi, Daejeon 34122 (KR); KIM, Kwang-Mo, Daejeon 34122 (KR); LEE, Jung-Hoon, Daejeon 34122 (KR)
(74) Representative: BCKIP Part mbB
(86) International application number: PCT/KR2025/010288
(87) International publication number: WO 2026/023971

(57) **Abstract**

Disclosed is a battery module. The battery module includes a frame providing a space therein and having a venting hole in an upper surface thereof; a plurality of battery cells positioned within the frame; and a venting cover configured to cover the upper surface of the frame and having a partially different thickness.

## Description

### TECHNICAL FIELD

The present disclosure relates to a battery module.

The present application claims priority to Korean Patent Application No. 10-2024-0099479 filed on July 26, 2024 in the Republic of Korea, the disclosures of which are incorporated herein by reference.

### BACKGROUND ART

As the demand for portable electronic products such as smartphones, tablet PCs, and smart watches increases significantly and electric vehicles become increasingly widespread, research is actively being conducted on batteries installed the portable electronic products, especially secondary batteries that can be repeatedly charged and discharged.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be called a battery cell. In addition, multiple battery modules may be connected to each other to form a battery pack.

However, if a plurality of battery modules are included in the battery pack as above and each battery module includes a plurality of battery cells, the battery pack may be vulnerable to a thermal chain reaction between battery modules or between battery cells. For example, if an event such as thermal runaway occurs inside one battery module, the thermal runaway needs to be prevented from propagating to other battery modules or other battery cells. If thermal runaway propagation between battery modules or battery cells is not properly prevented, an event occurring in a specific battery module or battery cell may cause a chain thermal reaction in other battery modules or other battery cells, which may cause an explosion or fire or enlarge the scale thereof.

In particular, if an event such as thermal runaway occurs in a battery module, gas or flame may be randomly discharged to the outside. At this time, if the discharge of gas or flame is not properly controlled, gas or flame may be discharged toward another battery module, which may cause a thermal chain reaction in other battery modules. In particular, a module terminal may exist at the front side of the battery module, and a component such as a module bus bar may exist for electrical connection with another battery module or battery pack. Accordingly, if flame is discharged to the front side of the battery module, the module terminal may be damaged inside the battery pack, causing an electrical short. In addition, since another battery module may exist at the front side of the battery module, if flame is discharged to the front side of a specific battery module, the discharged flame may be directed to another battery module, which may easily cause a fire to spread between battery modules.

If the thermal propagation between battery modules or battery cells is not properly controlled, the voltage drop of the battery module or battery pack may occur rapidly. This may cause a sudden shutdown of a device equipped with the battery module or battery pack, resulting in unexpected damage. For example, if a voltage drop of the battery pack occurs suddenly while an electric vehicle is in operation, it is impossible to secure sufficient time to move the electric vehicle to a safe location.

Moreover, if a fire or explosion occurs suddenly due to failure to properly control thermal propagation between battery modules or battery cells, there is a high possibility of causing casualties to users. For example, when thermal runaway occurs in an electric vehicle, if a certain amount of time is not secured before it progresses to a full-blown fire, the occupants may not be able to escape safely.

### DISCLOSURE

### Technical Problem

The present disclosure is designed to solve the problems of the related art, and therefore the present disclosure is directed to providing a battery module having an improved structure to appropriately control the emission of flame, etc. generated inside the battery module, and a battery pack and a vehicle including the same.

The present disclosure is also directed to providing a structure capable of smoothly discharging a venting gas generated inside a battery module.

The present disclosure is also directed to providing a structure capable of blocking a venting gas generated externally from flowing into the battery module.

However, the technical problems that the present disclosure seeks to solve are not limited to the above, and other problems not mentioned herein will be clearly understood by those skilled in the art from the following disclosure.

### Technical Solution

In one aspect of the present disclosure, there is provided a battery module comprising: a frame providing a space therein and having a venting hole in an upper surface thereof; a plurality of battery cells positioned within the frame; and a venting cover configured to cover the upper surface of the frame and having a partially different thickness.

In addition, the venting cover may have a score line facing the venting hole.

In addition, the score line may extend along a perimeter of the venting hole.

In addition, the score line may extend along a partial region of the perimeter of the venting hole.

In addition, the venting cover may be configured to have a thickness increasing toward a center.

In addition, the venting cover may include a first part; a second part adjacent to the first part; and a third part positioned between the first part and the second part, and the third part may have a greater thickness than the first part and the second part.

In addition, the venting hole may be provided in plurality, and the first part, the second part, and the third part may have a score line facing some of the venting holes, respectively.

In addition, the score line of the first part may open the first part in a direction from the second part toward the first part.

In addition, the score line of the second part may open the second part in a direction from the first part toward the second part.

In addition, the third part may include a first score line that opens the third part in a direction from the second part toward the first part; and a second score line that opens the third part in a direction from the first part toward the second part.

In addition, the venting cover may be coupled to the upper surface of the frame.

A battery pack according to another aspect of the present disclosure includes the battery module according to the present disclosure.

A vehicle according to still another aspect of the present disclosure includes the battery module according to the present disclosure.

### Advantageous Effects

According to at least one of the embodiments of the present disclosure, when gas or flame is generated inside the battery module, the emission of such gas or flame may be appropriately controlled.

According to at least one of the embodiments of the present disclosure, the electrical safety of a battery module may be improved.

According to at least one of the embodiments of the present disclosure, heat propagation may be suppressed.

According to at least one of the embodiments of the present disclosure, venting direction control of a battery module may be facilitated.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is an exploded view showing a portion of the battery pack of FIG. 1.
FIG. 3 is an exploded view showing a portion of the battery pack of FIG. 2.
FIG. 4 is a diagram showing the battery module of FIG. 3.
FIG. 5 is an exploded view showing a portion of the battery module of FIG. 4.
FIG. 6 is a diagram showing the venting cover of FIG. 3.
FIG. 7 is a cross-sectional view taken along the line B-B' of FIG. 6.
FIG. 8 is a diagram showing the coupling of the battery module and the venting cover.
FIG. 9 is a cross-sectional view taken along the line A-A' of FIG. 1.
FIG. 10 is a diagram showing the changes in FIG. 9 when a thermal event occurs.
FIG. 11 is a diagram showing the change in FIG. 10 when a thermal event occurs.
FIG. 12 is a diagram showing the change in FIG. 11 when a thermal event occurs.
FIG. 13 is a diagram showing the movement of a venting gas when a thermal event occurs.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

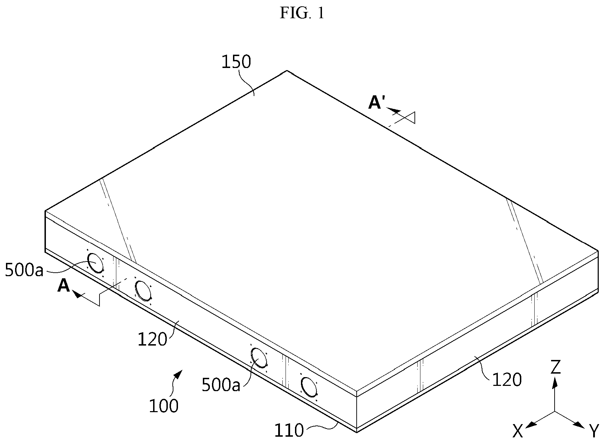

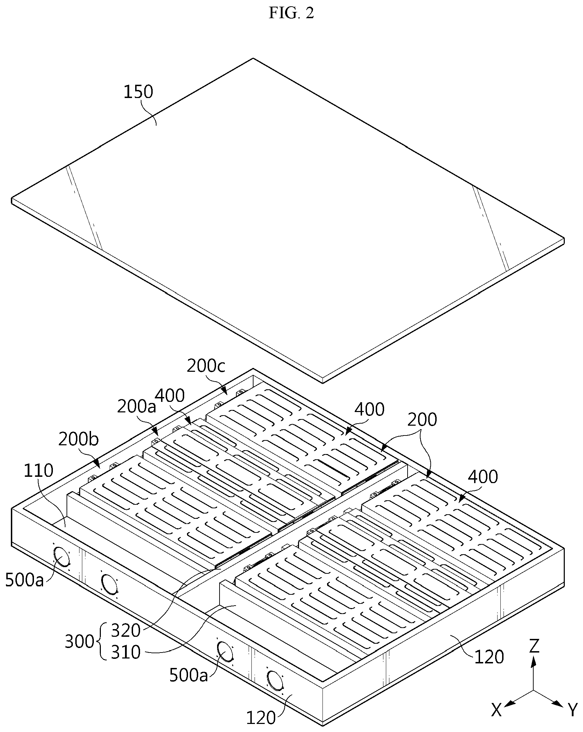

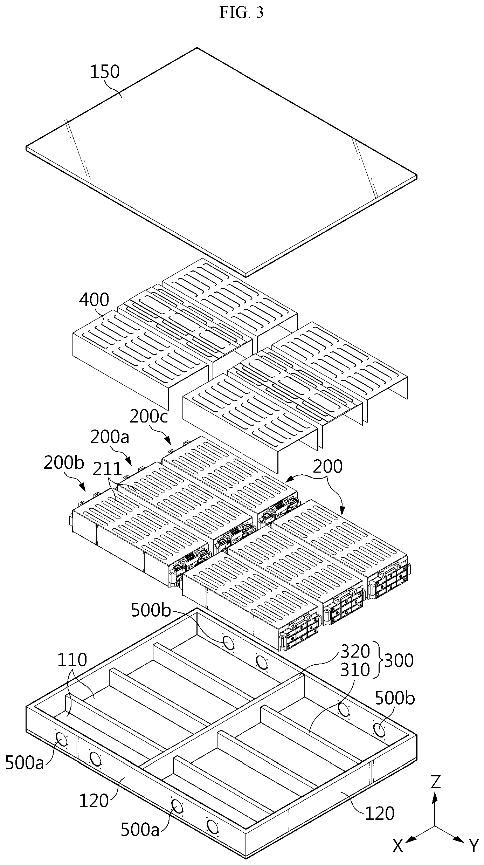

FIG. 1 is a diagram showing a battery pack according to an embodiment of the present disclosure. FIG. 2 is an exploded view showing a portion of the battery pack of FIG. 1. FIG. 3 is an exploded view showing a portion of the battery pack of FIG. 2.

Referring to FIGS. 1 to 3, a battery pack according to an embodiment of the present disclosure may include a case 100. The case 100 may form the outer appearance of the battery pack. The case 100 may have a rectangular parallelepiped shape. The case 100 may provide a space therein. The case 100 may include a pack cover 150. The pack cover 150 may have a square plate shape.

The battery module 200, 200a, 200b, 200c may be positioned inside the case 100. The battery module 200, 200a, 200b, 200c may have a top plate 210a facing the pack cover 150. The battery module 200, 200a, 200b, 200c may have a rectangular parallelepiped shape. The battery module 200, 200a, 200b, 200c may be provided in plurality. The plurality of battery modules 200, 200a, 200b, 200c may have substantially the same structure or configuration. The plurality of battery modules 200, 200a, 200b, 200c may have very similar structures or configurations.

The case 100 may include a base plate 110. The base plate 110 may have a square shape. The base plate 110 may have a flat shape. The base plate 110 may form the outer appearance of the battery pack. The base plate 110 may provide an internal space of the battery pack.

The case 100 may include a side wall 120. The side wall 120 may be installed, fastened, coupled, fixed, or attached to the upper surface of the base plate 110. The side wall 120 may be configured in four pieces. The side wall 120 may be arranged along the perimeter of the base plate 110. The side wall 120 may form the outer appearance of the battery pack. The side wall 120 may provide an interior space.

The pack cover 150 may be installed, fastened, coupled, fixed or attached to the side wall 120. The pack cover 150 may cover the internal space of the battery pack.

The battery pack according to an embodiment of the present disclosure may include a venting device 500. The venting device 500 may be installed on the side wall 120. For example, the venting device 500 may be installed on a front side wall 120. For example, the venting device 500 may be installed on a rear side wall 120. For example, the venting device 500 may be a gas valve. The venting device 500 may open to discharge gas when the pressure inside the case 100 increases. In addition, the venting device 500 may block external air from flowing into the case 100. The venting device 500 may be provided in plurality.

When a thermal event occurs from the battery module 200, 200a, 200b, 200c, the venting gas G may flow between the battery module 200, 200a, 200b, 200c and the pack cover 150. The space between the battery module 200, 200a, 200b, 200c and the pack cover 150 may be referred to as a venting space VS. In addition, the venting gas G may be discharged to the outside of the battery pack through the venting device 500.

The partition wall 300 may include a first partition wall 310 and a second partition wall 320. The partition wall 300 may be provided in plurality. The partition wall 300 may be installed, fastened, fixed, coupled, or attached to the upper surface of the base plate 110. The partition wall 300 may partition the internal space of the battery pack. The battery module 200, 200a, 200b, 200c may be located in the space partitioned by the partition wall 300.

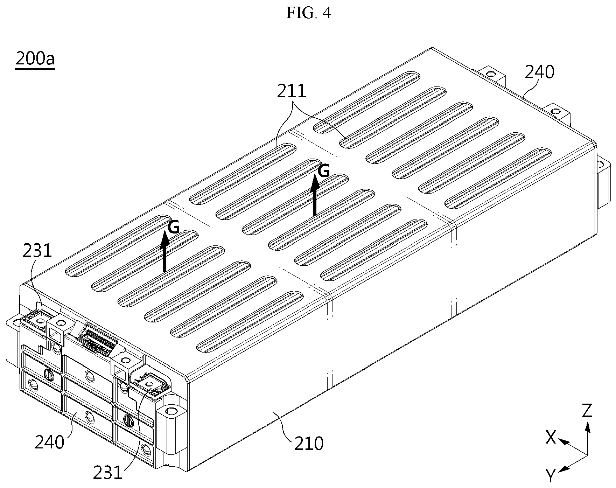

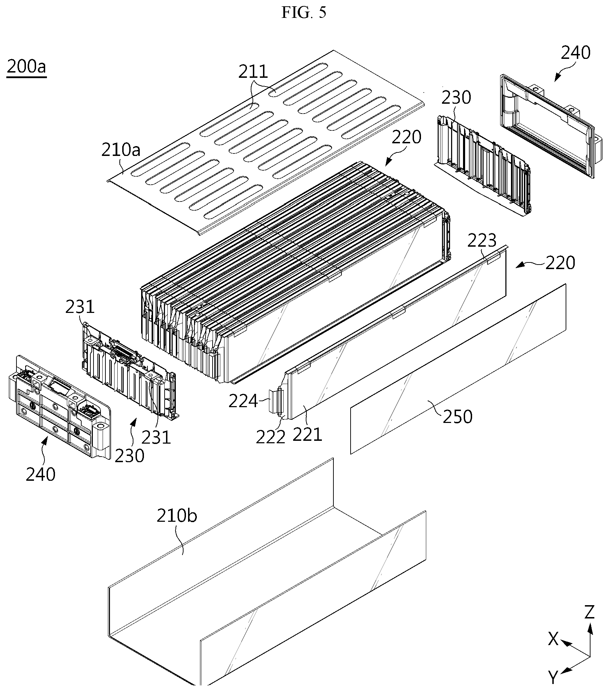

FIG. 4 is a diagram showing the battery module 200a of FIG. 3. FIG. 5 is an exploded view showing a portion of the battery module 200a of FIG. 4.

Referring to FIGS. 4 and 5, the battery module 200a may include a frame 210. The frame 210 may include a top plate 210a and a lower frame 210b. The frame 210 may provide a space therein. The lower frame 210b may have a bottom plate and a pair of side plates. The top plate 210a may be installed, fastened, coupled, fixed, or attached to the pair of side plates. For example, the top plate 210a may be coupled to the lower frame 210b by welding. The frame 210 may have open front and rear sides. The top plate 210a may have a venting hole 211. The venting hole 211 may communicate the inside and the outside of the frame 210 with each other.

If a thermal event occurs from the battery module 200a, the venting gas G and ignitable particles may be discharged to the outside of the frame 210 through the venting hole 211.

The battery module 200a may include a battery cell 220. The battery cell 220 may refer to a secondary battery. In particular, the battery cell 220 may be a pouch-type secondary battery. However, the shape of the battery cell 220 is not limited to a pouch shape, and the battery cell 220 may have various shapes such as a cylindrical shape or a rectangular parallelepiped shape. The battery cell 220 may be provided in plurality. The battery cell 220 may be accommodated inside the frame 210. The plurality of battery cells 220 may be stacked in the front and rear direction or the X-axis direction. The battery cell 220 may include an accommodation portion 221 that accommodates an electrode assembly, a first sealing portion 222 protruding to the left and right of the accommodation portion 221, and a second sealing portion 223 protruding to the top of the accommodation portion 221. Also, the battery cell 220 may include electrode leads 224 protruding to the left and right of the first sealing portion 222, respectively. Each battery cell 220 may extend along the right and left direction or the Y-axis direction. The electrode leads 224 may protrude to the left and right of the accommodation portion 221, respectively.

The pad 250 may be positioned between the plurality of battery cells 220. The pad 250 may be positioned between at least some of the battery cells 220 and/or at the periphery of the stack. For example, the pad 250 may be configured to be positioned between every four battery cells 220 stacked in the right and left direction.

The pad 250 may contain an elastic material to enable swelling absorption of the battery cell 220. For example, the pad 250 may be made of a foam material such as polyurethane. Alternatively, the pad 250 may contain a material capable of blocking heat or flames. For example, the pad 250 may contain an insulating or fire-retardant material such as silicone or mica.

The bus bar frame assembly 230 may be provided at the left and right sides of the plurality of battery cells 220, respectively. The bus bar frame assembly 230 may be electrically connected to the electrode leads 224 of the plurality of battery cells 220.

A pair of end covers 240 may be coupled to the left and right sides of the frame 210, respectively. The pair of end covers 240 may cover the left and right sides of the frame 210. The end cover 240 may have a square shape. The end cover 240 may be equipped with a power terminal 231.

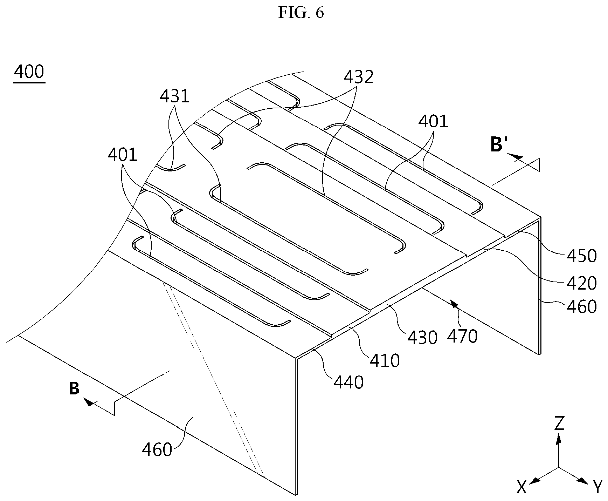

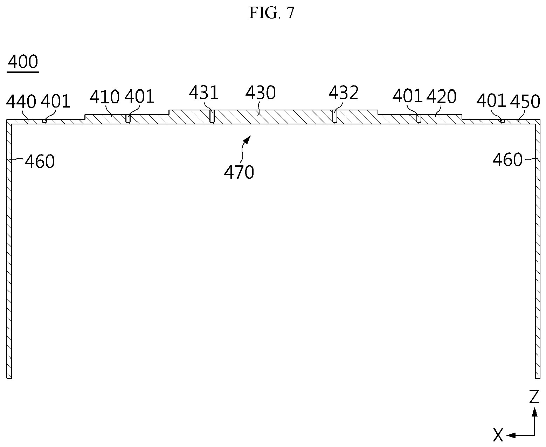

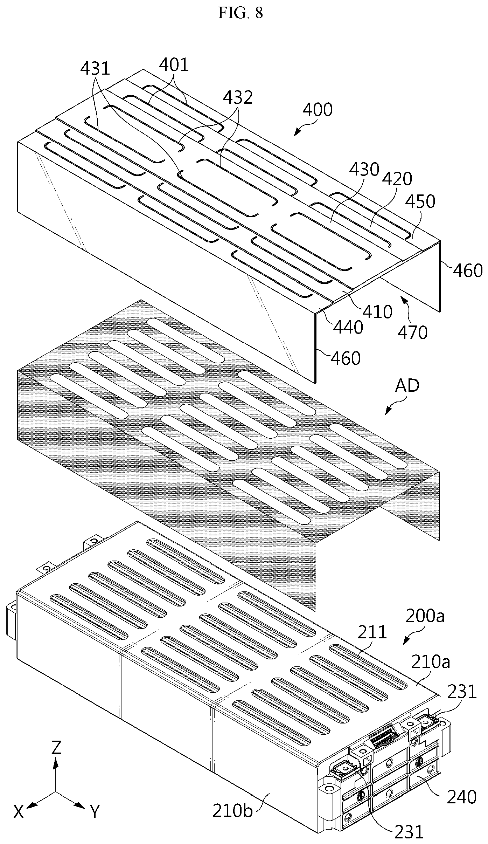

FIG. 6 is a diagram showing the venting cover 400 of FIG. 3. FIG. 7 is a cross-sectional view taken along the line B-B' of FIG. 6. FIG. 8 is a diagram showing the coupling of the battery module 200, 200a, 200b, 200c and the venting cover 400.

Referring to FIGS. 6 to 8, the battery module 200, 200a, 200b, 200c according to an embodiment of the present disclosure may include a frame 210. The frame 210 may provide a space therein. The frame 210 may have a venting hole 211 in the upper surface thereof. The top plate 210a may have a venting hole 211. The venting hole 211 may penetrate the top plate 210a.

The plurality of battery cells 220 may be located inside the frame 210.

The venting cover 400 may cover the upper surface of the frame 210. The venting cover 400 may cover the upper surface of the top plate 210a. The venting cover 400 may cover the venting hole 211. The venting cover 400 may have a partially different thickness.

If a thermal event occurs from the battery cell 220, the venting gas G or ignitable particles may be discharged to the outside of the frame 210 through the venting hole 211. At this time, the venting gas G or ignitable particles may rupture the venting cover 400 and be discharged. Since the venting cover 400 has a partially different thickness, the pressure for opening may be partially different. For example, a part of the venting cover 400 with a relatively thin thickness may be opened by a relatively low pressure. For example, a part of the venting cover 400 with a relatively thick thickness may be opened by a relatively high pressure. The venting gas G or ignitable particles may rupture the part of the venting cover 400 with a thin thickness first and be discharged.

Referring to FIGS. 6 to 8, the venting cover 400 may include a top part 470 and a side part 460. The top part 470 may be coupled, fastened, attached, or fixed to the upper surface of the frame 210. The top part 470 may be coupled, fastened, attached, or fixed to the upper surface of the top plate 210a. The side part 460 may extend from the top part 470. The side part 460 may be provided at the front side and the rear side of the top part 470, respectively. The side part 460 may be coupled, fastened, attached, or fixed to the front side of the frame 210. The side part 460 may be coupled, fastened, attached, or fixed to the rear side of the frame 210. The top part 470 and the side part 460 may be formed integrally.

An adhesive member may be arranged between the venting cover 400 and the frame 210.

The venting cover 400 may contain a fire-resistant material. The venting cover 400 may contain a heat-resistant material. For example, the venting cover 400 may contain a mica material.

Referring to FIGS. 6 to 8, the venting cover 400 may have a score line 401, 431, 432. The score line 401, 431, 432 may be used as a term that includes and collectively refers to a perforated line 401, 431, 432, a notching line 401, 431, 432, a cutting line 401, 431, 432, a shredding line 401, a tear line 401, 431, 432, or a separation line 401, 431, 432. The score line 401, 431, 432 may be configured to be easily separated by pressure applied to the venting cover 400.

The venting hole 211 may be provided in plurality. The score line 401, 431, 432 may be provided in plurality. The plurality of score lines 401, 431, 432 may be provided to correspond one-to-one to the plurality of venting holes 211. Each score line 401, 431, 432 may face each venting hole 211.

When a thermal event occurs, the venting gas G or ignitable particles may pressurize the score line 401, 431, 432 through the venting hole 211. By separating the score line 401, 431, 432, the venting hole 211 may be opened, and the venting gas G or ignitable particles may be discharged to the outside of the battery module 200, 200a, 200b, 200c.

Referring to FIGS. 6 to 8, the score line 401, 431, 432 may extend along the perimeter of the venting hole 211. For example, when the venting hole 211 has a circular shape, the score line 401, 431, 432 may have a circular trajectory. For example, when the venting hole 211 has an elliptical shape, the score line 401, 431, 432 may have an elliptical trajectory. Since the score line 401, 431, 432 extend along the perimeter of the venting hole 211, the venting hole 211 may be easily opened by the venting gas G or ignitable particles.

The score line 401, 431, 432 may extend along a partial region of the perimeter of the venting hole 211. For example, if the venting hole 211 has a circular shape, the score line 401, 431, 432 may have a partial trajectory of a circle. For example, if the venting hole 211 has an elliptical shape, the score line 401, 431, 432 may have a partial trajectory of an ellipse. When a thermal event occurs, a portion of the venting cover 400 may be separated along the score line 401, 431, 432, but may remain connected to the remaining portion of the venting cover 400. When a thermal event occurs, the venting hole 211 may be partially opened. When a thermal event occurs, the separated portion of the venting cover 400 may guide the direction of the venting gas G or ignitable particles to be discharged.

Referring to FIGS. 6 to 8, the top part 470 of the venting cover 400 may be configured to have a thickness that increases toward the center. The central portion of the top part 470 may be opened by a relatively high pressure. When a thermal event occurs, the outer portion of the top part 470 may be opened first. When a thermal event occurs, the top part 470 may be sequentially opened from the outer portion to the central portion. By sequentially opening the top part 470, the flow direction of the venting gas G or ignitable particles may be formed evenly. By sequentially opening the top part 470, the discharged venting gas G or ignitable particles may be blocked from flowing into the battery module 200a.

Referring to FIGS. 6 to 8, the top part 470 of the venting cover 400 may include a first part 410 and a second part 420 adjacent to the first part 410. The first part 410 may extend along the right and left direction or the Y-axis direction. The second part 420 may extend along the right and left direction or the Y-axis direction. The top part 470 may include a third part 430. The third part 430 may be located between the first part 410 and the second part 420. The third part 430 may be located at the center of the top part 470. The third part 430 may extend along the right and left direction or the Y-axis direction.

The third part 430 may have a greater thickness than the first part 410. When a thermal event occurs, the third part 430 may open later than the first part 410.

The third part 430 may have a greater thickness than the second part 420. When a thermal event occurs, the third part 430 may open later than the second part 420.

The first part 410 and the second part 420 may be configured to have substantially the same thickness.

Referring to FIGS. 6 to 8, the top part 470 of the venting cover 400 may include a fourth part 440. The fourth part 440 may extend from the first part 410. The fourth part 440 may be connected to the side part 460. The fourth part 440 may extend along the right and left direction or the Y-axis direction. The fourth part 440 may have a thinner thickness than the first part 410. When a thermal event occurs, the fourth part 440 may be opened before the first part 410.

The top part 470 of the venting cover 400 may include a fifth part 450. The fifth part 450 may extend from the second part 420. The fifth part 450 may be connected to the side part 460. The fifth part 450 may extend along the right and left direction or the Y-axis direction. The fifth part 450 may have a thinner thickness than the second part 420. When a thermal event occurs, the fifth part 450 may be opened before the second part 420. The fourth part 440 and the fifth part 450 may be configured to have substantially the same thickness.

The top part 470 may be sequentially positioned in the order of the fifth part 450, the second part 420, the third part 430, the first part 410, and the second part 420 along the +X-axis direction. The top part 470 may be sequentially positioned in the order of the fourth part 440, the first part 410, the third part 430, the second part 420, and the fifth part 450 along the -X-axis direction.

The first part 410 to the fifth part 450 may be formed integrally. The first part 410 to the fifth part 450 may also be formed by coupling a plurality of layers.

Referring to FIGS. 6 to 8, the plurality of venting holes 211 may be arranged throughout the top plate 210a. The plurality of score lines 401, 431, 432 may be arranged throughout the top part 470. The first part 410 to the fifth part 450 may cover the plurality of venting holes 211, respectively. The first part 410, the second part 420, the fourth part 440, or the fifth part 450 may have a plurality of score lines 401, respectively.

Referring to FIGS. 6 to 8, the score line 401 of the fourth part 440 may extend along the remaining portion of the perimeter of the venting hole 211 except the rear side or the -X-axis portion thereof. The score line 401 of the first part 410 may extend along the remaining portion of the perimeter of the venting hole 211 except the rear side or the -X-axis portion thereof. The score line 401 of the second part 420 may extend along the remaining portion of the perimeter of the venting hole 211 except the front side or the +X-axis portion thereof. The score line 401 of the fifth part 450 may extend along the remaining portion of the perimeter of the venting hole 211 except the front side or the +X-axis portion thereof. Among the plurality of score lines 431, 432 provided in the third part 430, the first score line 431 may extend along the remaining portion of the perimeter of the venting hole 211 except for the rear side or the -X-axis portion thereof. Among the plurality of score lines 431, 432 provided in the third part 430, the second score line 432 may extend along the remaining portion of the perimeter of the venting hole 211 except the front side or the +X-axis portion thereof. The first score line 431 may be located adjacent to the first part 410. The second score line 432 may be located adjacent to the second part 420. The score lines 431, 432 of the third part 430 may be located in the order of the second score line 432 and the first score line 431 along the +X-axis direction. The score lines 431, 432 of the third part 430 may be located in the order of the first score line 431 and the second score line 432 along the -X-axis direction.

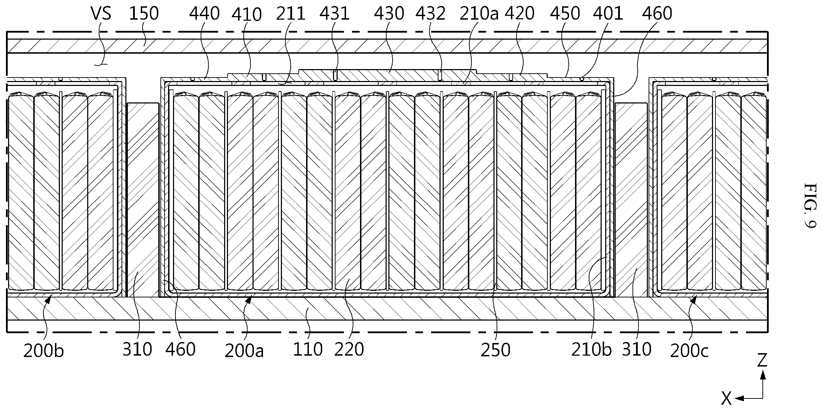

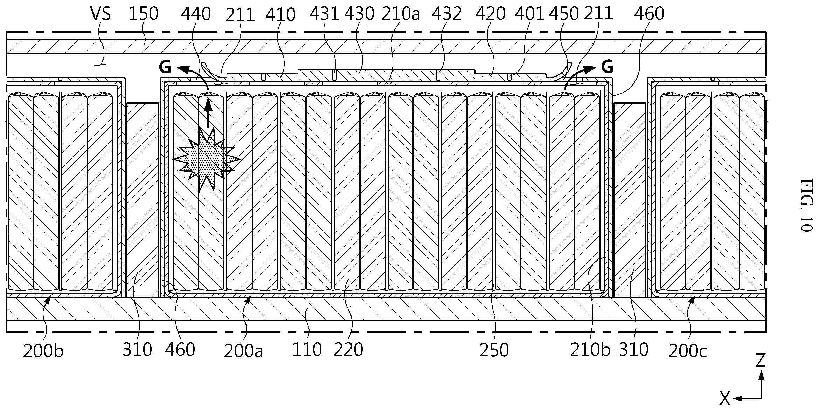

FIG. 9 is a cross-sectional view taken along the line A-A' of FIG. 1. FIG. 10 is a diagram showing the changes in FIG. 9 when a thermal event occurs.

Referring to FIGS. 9 and 10, when a thermal event occurs, the fourth part 440 or the fifth part 450 may be opened. The venting gas G or ignitable particles may be discharged into the venting space VS through the fourth part 440 or the fifth part 450. At this time, the first part 410, the second part 420, and the third part 430 may not be opened. The venting gas G or ignitable particles discharged through the fourth part 440 or the fifth part 450 may be blocked from flowing into the battery module 200a through the first part 410, the second part 420, and the third part 430.

The score line 401 of the fourth part 440 may be opened to the front or in the +X-axis direction. The rear side of the score line 401 of the fourth part 440 may remain connected to the fourth part 440 without being separated. The rear side of the score line 401 of the fourth part 440 may be folded without being separated. The venting gas G or ignitable particles may be discharged to the front or in the +X-axis direction through the fourth part 440.

The score line 401 of the fifth part 450 may be opened to the rear or in the -X-axis direction. The front side of the score line 401 of the fifth part 450 may remain connected to the fifth part 450 without being separated. The front side of the score line 401 of the fifth part 450 may be folded without being separated. The venting gas G or ignitable particles may be discharged to the rear or in the -X-axis direction through the fifth part 450.

As the venting gas G or ignitable particles are dispersed and discharged to the front and rear, damage to the battery modules 200b, 200c adjacent to the battery module 200a where a thermal event has occurred may be dispersed. As the venting gas G or ignitable particles are dispersed and discharged in the +X-axis direction and the -X-axis direction, damage to the battery modules 200b, 200c adjacent to the battery module 200a where a thermal event has occurred may be dispersed.

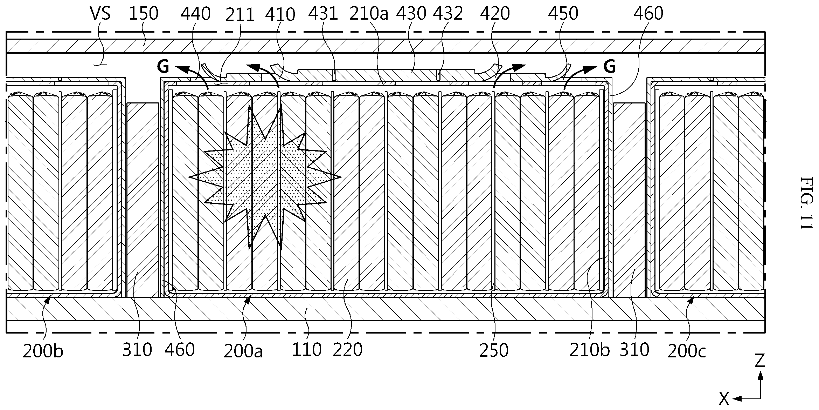

FIG. 11 is a diagram showing the change in FIG. 10 when a thermal event occurs. Referring to FIGS. 9 to 11, the first part 410 or the second part 420 may be additionally opened. The venting gas G or ignitable particles may be discharged into the venting space VS through the fourth part 440, the fifth part 450, the first part 410, or the second part 420. At this time, the third part 430 may not be opened. The venting gas G or ignitable particles discharged through the fourth part 440, the fifth part 450, the first part 410, or the second part 420 may be blocked from flowing into the battery module 200a through the third part 430.

The score line 401 of the first part 410 may be opened to the front or in the +X-axis direction. The score line 401 of the first part 410 may open the first part 410 in a direction from the second part 420 toward the first part 410. The rear side of the score line 401 of the first part 410 may remain connected to the first part 410 without being separated. The rear side of the score line 401 of the first part 410 may be folded without being separated. The venting gas G or ignitable particles may be discharged to the front or in the +X-axis direction through the first part 410.

The fourth part 440 may be opened before the first part 410. The fourth part 440 may be opened after the first part 410. By sequentially opening the fourth part 440 and the first part 410, the flow direction of the venting gas G or ignitable particles may be stably formed to the front or in the +X-axis direction.

The score line 401 of the second part 420 may be opened to the rear or in the -X-axis direction. The score line 401 of the second part 420 may open the second part 420 in a direction from the first part 410 toward the second part 420. The front side of the score line 401 of the second part 420 may remain connected to the second part 420 without being separated. The front side of the score line 401 of the second part 420 may be folded without being separated. The venting gas G or ignitable particles may be discharged to the rear or in the -X-axis direction through the second part 420.

The second part 420 may be opened before the fifth part 450. The fifth part 450 may be opened after the second part 420. By sequentially opening the fifth part 450 and the second part 420, the flow direction of the venting gas G or ignitable particles may be stably formed to the rear or in the -X-axis direction.

As the venting gas G or ignitable particles are dispersed and discharged toward the front and rear sides, damage to the battery modules 200b, 200c adjacent to the battery module 200a where a thermal event has occurred may be dispersed. As the venting gas G or ignitable particles are dispersed and discharged in the +X-axis direction and the -X-axis direction, damage to the battery modules 200b, 200c adjacent to the battery module 200a where a thermal event has occurred may be dispersed.

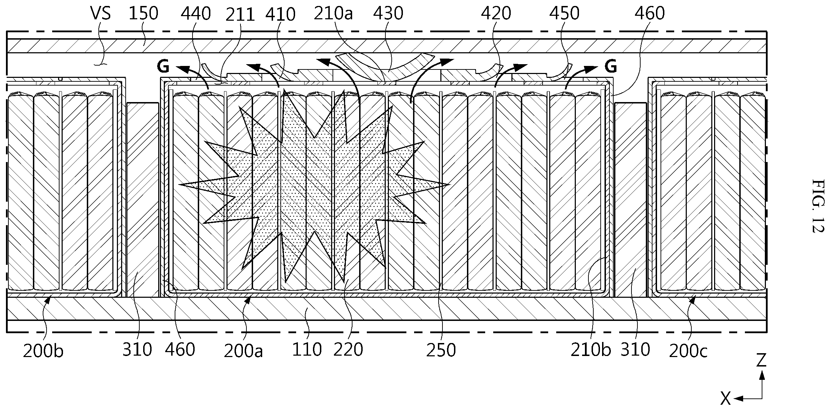

FIG. 12 is a diagram showing the change in FIG. 11 when a thermal event occurs. Referring to FIGS. 9 to 12, the third part 430 may be additionally opened. The venting gas G or ignitable particles may be discharged into the venting space VS through the fourth part 440, the fifth part 450, the first part 410, the second part 420, or the third part 430.

The first score line 431 of the third part 430 may be opened to the front or in the +X-axis direction. The first score line 431 of the third part 430 may open the third part 430 in a direction from the second part 420 toward the first part 410. The rear side of the first score line 431 of the third part 430 may remain connected to the third part 430 without being separated. The rear side of the first score line 431 of the third part 430 may be folded without being separated. The venting gas G or ignitable particles may be discharged to the front or in the +X-axis direction through the third part 430.

The first part 410 may be opened before the third part 430. The third part 430 may be opened after the first part 410. By sequentially opening the first part 410 and the third part 430, the flow direction of the venting gas G or ignitable particles may be stably formed to the front or in the +X-axis direction.

The second score line 432 of the third part 430 may be opened to the rear or in the -X-axis direction. The second score line 432 of the third part 430 may open the third part 430 in a direction from the first part 410 toward the second part 420. The front side of the second score line 432 of the third part 430 may remain connected to the third part 430 without being separated. The front side of the second score line 432 of the third part 430 may be folded without being separated. The venting gas G or ignitable particles may be discharged to the rear or in the -X-axis direction through the third part 430.

The second part 420 may be opened before the third part 430. The third part 430 may be opened after the second part 420. By sequentially opening the second part 420 and the third part 430, the flow direction of the venting gas G or ignitable particles may be stably formed to the rear or in the -X-axis direction.

As the venting gas G or ignitable particles are dispersed and discharged toward the front and rear sides, damage to the battery modules 200b, 200c adjacent to the battery module 200a where a thermal event has occurred may be dispersed. As the venting gas G or ignitable particles are dispersed and discharged in the +X-axis direction and the -X-axis direction, damage to the battery modules 200b, 200c adjacent to the battery module 200a where a thermal event has occurred may be dispersed.

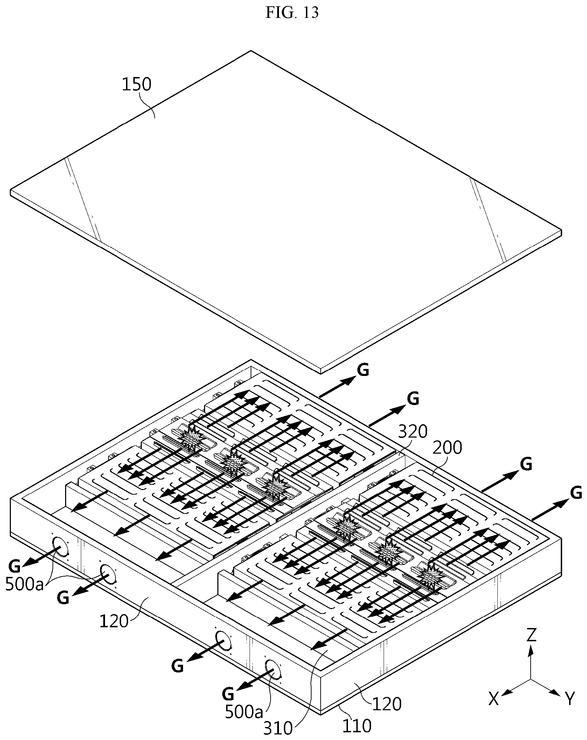

FIG. 13 is a diagram showing the movement of a venting gas G when a thermal event occurs. Referring to FIGS. 3 and 13, the venting gas G or ignitable particles discharged to the front or in the +X-axis direction from the battery module 200a may be discharged to the outside of the battery pack through the venting device 500a installed on the front side wall 120.

The venting gas G or ignitable particles discharged to the rear or in the -X-axis direction from the battery module 200a may be discharged to the outside of the battery pack through the venting device 500b installed on the rear side wall 120.

In addition, the battery pack according to the present disclosure may further include various components other than the battery module 200, 200a, 200b, 200c, such as various battery pack components known at the time of filing of this application, such as a BMS, a bus bar, a relay, a current sensor, etc.

Meanwhile, components such as a BMS, a bus bar, a relay, and a current sensor may be included as components of the battery module 200, 200a, 200b, 200c according to the present disclosure. In this case, components such as a BMS, a bus bar, a relay, and a current sensor may be provided inside the case 100. In this case, the battery module may also be referred to as a battery pack.

The battery module 200, 200a, 200b, 200c according to the present disclosure may be applied to a vehicle such as an electric vehicle or a hybrid electric vehicle. That is, the vehicle according to the present disclosure may include the battery module 200, 200a, 200b, 200c according to the present disclosure or the battery pack according to the present disclosure. In addition, the vehicle according to the present disclosure may further include various other components included in the vehicle in addition to the battery module or the battery pack. For example, the vehicle according to the present disclosure may further include a vehicle body, a motor, a control device such as an ECU (electronic control unit), in addition to the battery module 200 according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module comprising:
a frame providing a space therein and having a venting hole in an upper surface thereof;
a plurality of battery cells positioned within the frame; and
a venting cover configured to cover the upper surface of the frame and having a partially different thickness.

2. The battery module according to claim 1,
wherein the venting cover has a score line facing the venting hole.

3. The battery module according to claim 2,
wherein the score line extends along a perimeter of the venting hole.

4. The battery module according to claim 3,
wherein the score line extends along a partial region of the perimeter of the venting hole.

5. The battery module according to claim 1,
wherein the venting cover is configured to have a thickness increasing toward a center.

6. The battery module according to claim 1,
wherein the venting cover includes:
a first part;
a second part adjacent to the first part; and
a third part positioned between the first part and the second part,
wherein the third part has a greater thickness than the first part and the second part.

7. The battery module according to claim 6,
wherein the venting hole is provided in plurality, and
wherein the first part, the second part, and the third part have a score line facing some of the venting holes, respectively.

8. The battery module according to claim 7,
wherein the score line of the first part opens the first part in a direction from the second part toward the first part.

9. The battery module according to claim 7,
wherein the score line of the second part opens the second part in a direction from the first part toward the second part.

10. The battery module according to claim 7,
wherein the third part includes:
a first score line that opens the third part in a direction from the second part toward the first part; and
a second score line that opens the third part in a direction from the first part toward the second part.

11. The battery module according to claim 1,
wherein the venting cover is coupled to the upper surface of the frame.

12. A battery pack comprising the battery module according to any one of claims 1 to 11.

13. A vehicle comprising the battery module according to any one of claims 1 to 11.
